# EUROPÄISCHE PATENTSCHRIFT

(11) **EP 1 032 106 B1**
(45) Veröffentlichungstag und Bekanntmachung des Hinweises auf die Patenterteilung: **20.09.2006**
(21) Anmeldenummer: 00103671.4
(22) Anmeldetag: 22.02.2000
(51) Int. Cl.: H02J 1/10, H02J 9/00

(54) **Verfahren und Vorrichtung zur Energieversorgung elektrischer Verbraucher**
Method and device for supplying power to electric loads
Méthode et dispositif d'alimentation en énergie des charges électriques

(30) Priorität: 25.02.1999 DE 19908019
(43) Veröffentlichungstag der Anmeldung: 30.08.2000
(73) Patentinhaber: Grundig Multimedia B.V., 1083HJ Amsterdam (NL)
(72) Erfinder: Bienefeld, Axel, 90762 Fürth (DE); Stracke, Juergen, 90762 Fürth (DE)
(74) Vertreter: Pröll, Jürgen

(56) Entgegenhaltungen:
- EP-A- 0 803 966
- US-A- 4 975 592
- US-A- 5 036 261
- US-A- 5 532 914
- PATENT ABSTRACTS OF JAPAN vol. 1996, no. 09, 30. September 1996 (1996-09-30) & JP 08 130871 A (SANKEN ELECTRIC CO LTD), 21. Mai 1996 (1996-05-21)

## Beschreibung

Die vorliegende Erfindung betrifft ein Verfahren und eine Vorrichtung zur Energieversorgung elektrischer Verbraucher, insbesondere von elektrischen Verbrauchern in Geräten der Unterhaltungselektronik.

Bei Geräten der Unterhaltungselektronik tritt häufig das Problem auf, daß wegen der engen räumlichen Anordnung der elektrischen Verbraucher, d. h. der Baugruppen der Geräte, Probleme mit der Abführung der entstehenden Verlustwärme auftreten. Andere Probleme entstehen dadurch, daß Baugruppen teilweise auch dann mit elektrischer Energie versorgt werden, obwohl sie zu bestimmten Zeitpunkten eigentlich nicht oder nur teilweise benötigt werden.

Es ist daher Aufgabe der vorliegenden Erfindung, ein Verfahren und eine Vorrichtung anzugeben, bei denen die durch auftretende Verlustleistung verursachten Probleme vermieden werden.

Aus US-A-5,532,914 ist ein Gleichstrom-/Gleichstrom-Off Konverter offenbart. Dieser Gleichstrom Konverter überwacht, ob ein Verbraucher Energie aufnimmt. Ist der Verbraucher ausgeschaltet, so ist auch der Gleichstrom Konverter abgeschaltet.

Aus US-A-4,975,592 und EP-A-0 803 966 jeweils ist eine Stromversorgungseinrichtung zum Speisen wenigstens eines Verbrauchers und elektrischer Energie aus einer Quelle offenbart.

Bei der vorliegenden Erfindung wird diese Aufgabe durch die Merkmale der Ansprüche 1 und 6 gelöst.

Bei dem erfindungsgemäßen Verfahren bzw. der erfindungsgemäßen Vorrichtung wird dabei von der Überlegung ausgegangen, daß der Energieverbrauch der elektrischen Verbraucher ermittelt wird und den elektrischen Verbrauchern nur der ermittelte Energieverbrauch zur Verfügung gestellt wird.

Der Energiebedarf wird durch eine Feststellung des Betriebszustandes der einzelnen elektrischen Verbraucher, durch eine Überwachung einer maximal zulässigen Verlustleistung oder die Überwachung einer maximal zulässigen Betriebstemperatur ermittelt.>

Der Vorteil des erfindungsgemäßen Verfahrens bzw. der erfindungsgemäßen Vorrichtung ist darin zu sehen, daß in den elektrischen Verbrauchern nicht unnötig elektrische Energie verbraucht wird, wodurch die insgesamt auftretende Verlustleistung verringert wird und somit eine unerwünschte Erwärmung des Geräts mit allen bekannten negativen Folgen unterbleibt.

Eine Weiterbildung der Erfindung geht von der Verwendung einer modularen Energieversorgung aus, die eine Mehrzahl von Energiequellen enthält, denen die elektrischen Verbraucher zugeordnet sind. Je nach Bedarf werden einzelne der Energiequellen ein- oder ausgeschaltet.

Eine andere Weiterbildung der Erfindung geht von der Überlegung aus, die Verlustleistung dadurch zu verringern, daß die Höhe der Ausgangsspannung von verwendeten Energiequellen entsprechend des benötigten Energiebedarfs variiert wird.

Entsprechend einer Ausführungsform der erfindungsgemäßen Vorrichtung eignen sich als Energieversorgungseinrichtungen besonders gut regelbare Schaltnetzteile, da diese im Vergleich zu Linearreglern deutlich geringere Verlustleistungen erzeugen.

Weitere Vorteile der vorliegenden Erfindung ergeben sich aus der nachfolgenden Beschreibung des erfindungsgemäßen Verfahrens sowie der erfindungsgemäßen Vorrichtung anhand von Figuren.

Es zeigt
- Fig. 1: ein Prinzipschaltbild eines Ausführungsbeispiels eines die erfindungsgemäßen Vorrichtung aufweisenden Geräts, und
- Fig. 2: einen Ausschnitt aus dem Prinzipschaltbild nach Fig. 1, in einer detaillierteren Darstellung.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind.

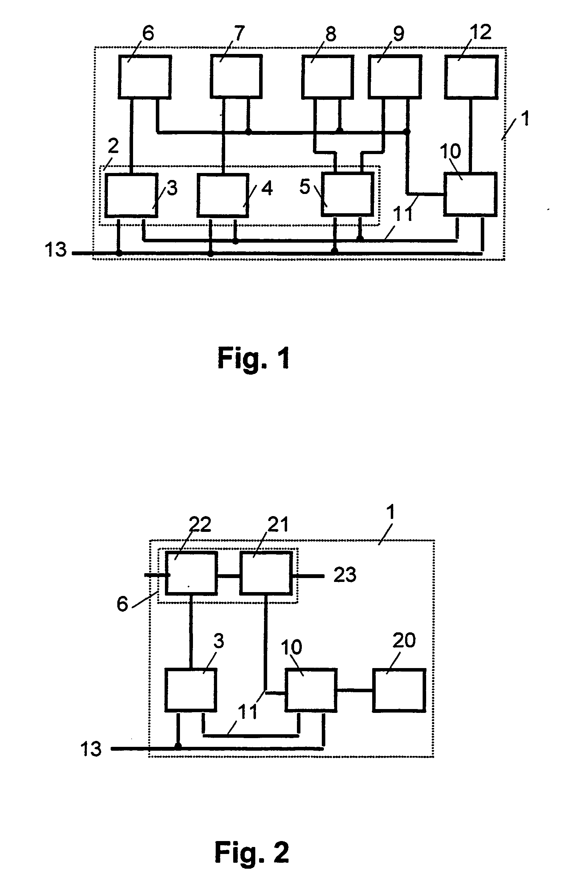

Fig.1 zeigt ein Prinzipschaltbild eines Ausführungsbeispiels eines die erfindungsgemäße Vorrichtung aufweisenden Geräts 1. Das Gerät 1 ist insbesondere ein Gerät der Unterhaltungselektronik, beispielsweise ein Autoradio oder ein Fernsehgerät. Das Gerät 1 umfaßt eine modular aufgebaute Energieversorgungseinrichtung 2, die aus mehreren Einrichtungen 3 bis 5 zur Energieversorgung, z. B. regelbaren Schaltnetzteilen oder regelbaren Spannungsquellen, besteht. An die Schaltnetzteile 3 bis 5 sind elektrische Verbraucher 6 bis 9, z. B. ein Audioverstärker 6, angeschlossen. Die elektrischen Verbraucher 6 bis 9 sowie die Schaltnetzteile 3 bis 5 sind mittels eines Busses 11 mit einer Steuereinrichtung 10 verbunden. Darüber hinaus sind die Schaltnetzteile 3 bis 5 sowie die Steuereinrichtung 10, die zur unterbrechungsfreien Energieversorgung über eine eigene Einrichtung zur Energieversorgung verfügen kann, an einer Versorgungsspannung 13, beispielsweise einer Netzspannung, angeschlossen.

An die Steuereinrichtung 10 ist außerdem ein Temperaturmeßeinrichtung 12 angeschlossen. Die Steuereinrichtung 10 kann von einem Mikrocomputer gebildet werden, die Temperaturmeßeinrichtung 12 beispielsweise von einem Widerstand mit bekanntem Temperaturkoeffizienten und einem Analog/Digital-Wandler, der die Werte des Widerstands für den Mikrokomputer 10 digitalisiert. Als Bus 11 kann der im Bereich der Unterhaltungselektronik weitverbreitete I²C-Bus (Inter Integrated Circuit Bus) verwendet werden.

Während des Betriebs des Geräts 1 wird von der Steuereinrichtung 10 der aktuell benötigte Energiebedarf der elektrischen Verbraucher 6 bis 9 festgestellt und die Schaltnetzteile 3 bis 5 werden durch die Steuereinrichtung 10 derart gesteuert, daß die von ihnen zur Verfügung gestellte elektrische Energie dem aktuell benötigten Energiebedarf entspricht. Hierbei wird berücksichtigt, daß verschiedene Baugruppen, insbesondere digitale Schaltgruppen, mit einem definierten Spannungspegel gespeist werden müssen.

Die Ermittlung des aktuellen Energiebedarfs der elektrischen Verbraucher 6 bis 9 kann in einer ersten Ausführungsform dadurch erfolgen, daß die Betriebszustände der einzelnen elektrischen Verbraucher 6 bis 9 durch die Steuereinrichtung 10 ermittelt werden. Beispielsweise kann festgestellt werden, ob momentan alle elektrischen Verbraucher 6 bis 9 für den Betrieb des Geräts 1 benötigt werden. Wird dabei festgestellt, daß beispielsweise der elektrische Verbraucher 7 augenblicklich nicht betrieben werden muß, schaltet die Steuereinrichtung 10 das zugeordnete Schaltnetzteil 4 ab. Falls zu einem späteren Zeitpunkt der elektrische Verbraucher 7 in Betrieb gesetzt werden soll, schaltet die Steuereinrichtung 10 das zugeordnete Schaltnetzteil 4 wieder ein.

Außerdem kann es vorgesehen sein, daß für das Gerät 1 eine maximal zulässige Verlustleistung vorgegeben ist. Wird die maximal zulässige Verlustleistung überschritten, kann die Steuereinrichtung 10 den Energieverbrauch der elektrischen Verbraucher 6 bis 9 beispielsweise dadurch verringern, daß weniger wichtige elektrische Verbraucher, welche für die Funktion des Gerätes im aktuellen Zustand keinen direkten Einfluß haben, abgeschaltet werden.

Daneben kann es vorgesehen sein, daß für das Gerät 1 eine maximal zulässige Betriebstemperatur vorgegeben ist. Diese kann mittels der an die Steuereinrichtung 10 angeschlossenen Temperaturmeßeinrichtung 12 überwacht werden. Bei Überschreiten der zulässigen Betriebstemperatur greift die Steuereinrichtung 10 ein und verringert die Energiezufuhr der Schaltnetzteile 3 bis 5 an die elektrischen Verbraucher 6 bis 9.

Fig. 2 zeigt einen Ausschnitt aus dem in Fig. 1 dargestellten Gerät 1 in einer detaillierteren Darstellung. Der elektrische Verbraucher 6 ist ein Verstärker für ein Audiosignal mit einer Endstufe 22 und einem digitalen Klangsteller 21, an dem eine Audiosignal 23 einer nicht dargestellten Audiosignalquelle anliegt. Die Wiedergabelautstärke des von der Endstufe 22 verstärkten und zur Verfügung gestellten Audiosignals kann mittels eines Bedienelements 20 eingestellt werden. Die Stellung des Bedienelements 20, und damit die gewünschte Lautstärke, wird von der Steuereinrichtung 10 überwacht und entsprechend der erkannten Stellung am digitalen Klangsteller 21 eingestellt. Um die an der Endstufe auftretende Verlustleistung zu verringern, wird, in Abhängigkeit von der Stellung des Bedienelements 20, die vom regelbaren Schaltnetzteil 3 abgegebene Spannung durch die Steuereinrichtung 10 geregelt. Bei einer Stellung des Bedienelements 20, die einer geringen Lautstärke entspricht, wird die Spannung des regelbaren Schaltnetzteils 3 verringert, wohingegen sie für eine Stellung des Bedienelements 20, die der maximalen Lautstärke entspricht, von der Steuereinrichtung 10 bis auf die üblicherweise verwendete vollständige Betriebsspannung erhöht wird. Insgesamt wird die Spannung des Schaltnetzteils 3 durch die Steuereinrichtung 10 in Abhängigkeit von der Aussteuerung des Audioverstärkers 6 geregelt. Anstelle der beschriebenen Auswertung der Stellung des Bedienelements 20 kann demzufolge auch direkt die Aussteuerung der Endstufe oder der Pegel des Eingangssignals der Endstufe ausgewertet werden.

Insbesondere beim Einsatz von digitalen Signalprozessoren ist die Regelung der Leistung der Endstufe ohne für einen Benutzer merklichen Einfluß durchführbar, da durch den digitalen Signalprozessor das Ausgangssignal verzögert wird und in dieser Verzögerungszeit die entsprechende Versorgungsspannung und somit die Leistung geregelt werden kann.

Es ist offensichtlich, daß die oben jeweils einzeln für sich beschriebenen Maßnahmen zur Ermittlung des Energiebedarfs und/oder die Maßnahmen zur Anpassung der Energieversorgung an den ermittelten Energiebedarf kombiniert werden können, um eine bessere und zuverlässigere Funktionsweise des beschriebenen erfindungsgemäßen Verfahrens bzw. der erfindungsgemäßen Vorrichtung zu gewährleisten.

## Patentansprüche

1. Verfahren zur Energieversorgung elektrischer Verbraucher (6, ..., 9), insbesondere von elektrischen Verbrauchern in Geräten der Unterhaltungselektronik, mit einer Energieversorgungseinheit (2) bestehend aus einer Mehrzahl von Einrichtungen zur Energieversorgung (3, 4, 5), welche jeweils mindestens einem elektrischen Verbraucher (6, ..., 9) zugeordnet sind,
**dadurch gekennzeichnet, dass**
der aktuell benötigte Energiebedarf der elektrischen Verbraucher (6, ..., 9) ermittelt wird, die Energieversorgung für die elektrischen Verbraucher in Abhängigkeit vom ermittelten Energiebedarf vorgenommen wird, wobei den Verbrauchern ausschließlich der ermittelte Energiebedarf zur Verfügung gestellt wird, wobei die Ermittlung des aktuell benötigten Energiebedarfs mittels einer Temperaturmessung in dem die elektrischen Verbraucher (6, ..., 9) enthaltenden Gerät (1) vorgenommen wird.

2. Verfahren nach Anspruch 1,
**dadurch gekennzeichnet, dass**
zur Anpassung der Energieversorgung an den ermittelten Energiebedarf mindestens eine aus einer Mehrzahl von Energiequellen eingeschaltet oder ausgeschaltet wird.

3. Verfahren nach Anspruch 1 oder 2,
**dadurch gekennzeichnet, dass**
zur Anpassung der Energieversorgung an den ermittelten Energiebedarf eine Versorgungsspannung mindestens einer aus einer Mehrzahl von Energiequellen verringert oder erhöht wird.

4. Verfahren nach einem der Ansprüche 1 bis 3,
**dadurch gekennzeichnet, dass**
zur Ermittlung des Energiebedarfs der elektrischen Verbraucher deren Betriebszustand ermittelt wird.

5. Verfahren nach einem der Ansprüche 1 bis 4,
**dadurch gekennzeichnet, dass**
zur Ermittlung des Energiebedarfs der elektrischen Verbraucher eine vorgegebene maximale Verlustleistung für das die elektrischen Verbraucher enthaltende Gerät überwacht wird.

6. Vorrichtung zur Energieversorgung elektrischer Verbraucher, insbesondere von elektrischen Verbrauchern (6, ..., 9) in Geräten der Unterhaltungselektronik, mit einer Energieversorgungseinrichtung (2), wobei
die Energieversorgungseinrichtung (2) modular aus einer Mehrzahl von Einrichtungen zur Energieversorgung (3, 4, 5) aufgebaut ist,
der Mehrzahl von Einrichtungen zur Energieversorgung (3, 4, 5) jeweils mindestens ein elektrischer Verbraucher (6, ..., 9) zugeordnet ist,
**dadurch gekennzeichnet, dass**
eine Einrichtung zur Ermittlung des aktuell benötigten Energiebedarfs (10) vorgesehen ist, wobei die Einrichtung zur Ermittlung des aktuell benötigten Energiebedarfs (10) eine Temperaturmesseinrichtung (12) aufweist und eine Temperaturmessung in dem die elektrischen Verbraucher enthaltenden Geräte (1) vornimmt und dass eine Steuereinrichtung (10) vorgesehen ist, die aufgrund des von der Einrichtung zur Ermittlung des aktuellen Energiebedarfs (10) ermittelten Energiebedarfs die Mehrzahl von Einrichtungen zur Energieversorgung (3, 4, 5) steuert.

7. Vorrichtung nach Anspruch 6,
**dadurch gekennzeichnet, dass**
die Steuereinrichtung (10) aufgrund des ermittelten Energiebedarfs mindestens eine aus der Mehrzahl von Einrichtungen zur Energieversorgung (3, 4, 5) einschaltet oder ausschaltet.

8. Vorrichtung nach Anspruch 6 oder 7,
**dadurch gekennzeichnet, dass**
die Steuereinrichtung (10) aufgrund des ermittelten Energiebedarfs die Spannung mindestens einer aus der Mehrzahl von Einrichtungen zur Energieversorgung (3, 4, 5) verringert oder erhöht.

9. Vorrichtung nach einem der Ansprüche 6 bis 8,
**dadurch gekennzeichnet, dass**
die Einrichtung zur Ermittlung des aktuell benötigten Energiebedarfs (10) den Betriebszustand der elektrischen Verbraucher (6, ..., 9) ermittelt.

10. Vorrichtung nach einem der Ansprüche 6 bis 9,
**dadurch gekennzeichnet, dass**
die Einrichtung zur Ermittlung des aktuell benötigten Energiebedarfs (10) eine vorgebbare maximale Verlustleistung für das die elektrischen Verbraucher (6, ..., 9) enthaltende Gerät (1) überwacht.

11. Vorrichtung nach einem der Ansprüche 6 bis 10,
**dadurch gekennzeichnet, dass**
die Energieversorgungseinrichtung (2) modular aus einer Mehrzahl aus regelbaren Schaltnetzteilen (3, 4, 5) aufgebaut ist.

## Claims

1. Method of supplying power to electrical loads (6, ..., 9), in particular to electrical loads in entertainment electronics appliances, involving a power supply unit (2) comprising a plurality of power supply devices (3, 4, 5) that are each assigned to at least one electrical load (6, ..., 9), **characterized in that** the power loading actually needed for the electrical loads (6, ..., 9) is determined and power is supplied to the electrical loads as a function of the power loading determined, wherein only the power loading determined is made available to the loads, and wherein the power loading actually needed is determined by means of a temperature measurement in the appliance (1) containing the electrical loads (6, ..., 9).

2. Method according to Claim 1, **characterized in that**, to match the power supplied to the power loading determined, at least one of a plurality of power sources is switched on or switched off.

3. Method according to Claim 1 or 2, **characterized in that**, to match the power supplied to the power loading determined, a supply voltage of at least one of a plurality of power sources is reduced or increased.

4. Method according to any one of Claims 1 to 3, **characterized in that**, to determine the power loading of the electrical loads, their operating mode is determined.

5. Method according to any one of Claims 1 to 4, **characterized in that**, to determine the power loading of the electrical loads, a specified maximum power loss is monitored for the appliance containing the electrical loads.

6. Unit for supplying power to electrical loads, in particular to electrical loads (6, ..., 9) in entertainment electronics appliances, involving a power supply device (2), wherein the power supply device is made up modularly of a plurality of power supply devices (3, 4, 5), at least one electrical load (6, ..., 9) is assigned in each case to the plurality of power supply devices (3, 4, 5), **characterized in that** a device (10) is provided for determining the power loading actually needed, wherein the device (10) for determining the power loading actually needed comprises a temperature measuring device (12) and undertakes a temperature measurement in the appliance (1) containing the electrical loads and **in that** a control device (12) is provided that controls the plurality of power supply devices (3, 4, 5) on the basis of the power loading determined by the device (10) for determining the power loading actually needed.

7. Unit according to Claim 6, **characterized in that** the control device (10) switches on or switches off at least one of the plurality of power supply devices (3, 4, 5) on the basis of the power loading determined.

8. Unit according to Claim 6 or 7, **characterized in that** the control device (10) reduces or increases the voltage of at least one of the plurality of power supply devices (3, 4, 5) on the basis of the power loading determined.

9. Unit according to any one of Claims 6 to 8, **characterized in that** the device (10) for determining the power loading actually needed determines the operation mode of the electrical loads (6, ..., 9).

10. Unit according to any of one of Claims 6 to 9, **characterized in that** the device (10) for determining the power loading actually needed monitors a specifiable maximum power loss for the appliance (1) containing the electrical loads (6, ..., 9).

11. Unit according to any one of Claims 6 to 10, **characterized in that** the power supply device (2) is made up modularly of a plurality of controllable switch mode power supplies (3, 4, 5).

## Revendications

1. Procédé d'alimentation en énergie de consommateurs électriques (6 à 9), en particulier des consommateurs électriques dans des appareils de l'électronique de divertissement, comprenant une unité d'alimentation en énergie (2) comportant une pluralité de dispositifs d'alimentation en énergie (3, 4, 5) qui sont associés chacun à au moins un consommateur électrique (6 à 9), **caractérisé en ce que** le besoin en énergie actuel que nécessite le consommateur électrique (6 à 9) est déterminé, l'alimentation en énergie des consommateurs électriques est effectuée en fonction du besoin en énergie déterminé, le besoin en énergie déterminé étant exclusivement mis à disposition des consommateurs, la détermination du besoin actuel en énergie nécessaire étant effectuée au moyen d'une mesure de la température dans l'appareil (1) contenant les consommateurs électriques (6 à 9) .

2. Procédé selon la revendication 1, **caractérisé en ce que** pour adapter l'alimentation en énergie au besoin en énergie déterminé, au moins une source d'énergie parmi une pluralité de sources d'énergie est activée ou est désactivée.

3. Procédé selon la revendication 1 ou 2, **caractérisée en ce que** pour adapter l'alimentation en énergie au besoin en énergie déterminé, une tension d'alimentation d'au moins une source d'énergie parmi une pluralité de sources d'énergie est réduite où est augmentée.

4. Procédé selon l'une quelconque des revendications 1 à 3, **caractérisé en ce que** pour déterminer le besoin en énergie des consommateurs électriques, on détermine leur état de fonctionnement.

5. Procédé selon l'une quelconque des revendications 1 à 4, **caractérisé en ce que** pour déterminer le besoin en énergie des consommateurs électriques, on surveille une puissance dissipée maximale prédéfinie pour l'appareil contenant les consommateurs électriques.

6. Dispositif d'alimentation en énergie de consommateurs électriques, en particulier de consommateurs électriques (6 à 9) dans des appareils de l'électronique de divertissement, comprenant une installation d'alimentation en énergie (2), ladite installation d'alimentation en énergie (2) étant conçue sous forme modulaire avec une pluralité de dispositifs d'alimentation en énergie (3, 4, 5), au moins un consommateur électrique (6 à 9) étant associé chaque fois à la pluralité de dispositifs d'alimentation en énergie (3, 4, 5), **caractérisé en ce qu'**il est prévu un dispositif pour déterminer le besoin en énergie (10) actuel, le dispositif pour déterminer le besoin en énergie (10) actuel comportant un dispositif de mesure de la température (12) et effectuant une mesure de la température dans l'appareil (1) contenant les consommateurs électriques et **en ce qu'**il est prévu un dispositif de commande (10) qui, compte tenu du besoin en énergie déterminé par le dispositif de détermination du besoin en énergie (10) actuel, commande la pluralité des dispositifs d'alimentation en énergie (3, 4, 5).

7. Dispositif selon la revendication 6, **caractérisé en ce que**, compte tenu du besoin en énergie déterminé, le dispositif de commande (10) active ou désactive au moins un dispositif parmi une pluralité de dispositifs d'alimentation en énergie (3, 4, 5).

8. Dispositif selon la revendication 6 ou 7,
**caractérisé en ce que**, compte tenu du besoin en énergie déterminé, le dispositif de commande (10) réduit ou augmente la tension d'au moins un dispositif parmi une pluralité de dispositifs d'alimentation en énergie (3, 4, 5).

9. Dispositif selon l'une quelconque des revendications 6 à 8, **caractérisé en ce que** le dispositif de détermination du besoin en énergie (10) actuel, détermine l'état de fonctionnement des consommateurs électriques (6 à 9).

10. Dispositif selon l'une quelconque des revendications 6 à 9, **caractérisé en ce que** le dispositif de détermination du besoin en énergie (10) actuel surveille une puissance dissipée maximale prédéfinie pour l'appareil (1) contenant les consommateurs électriques (6 à 9).

11. Dispositif selon l'une quelconque des revendications 6 à 10, **caractérisé en ce que** l'installation d'alimentation en énergie (2) est conçue sous forme modulaire avec une pluralité d'éléments du réseau de distribution (3, 4, 5) réglables.
